# EUROPÄISCHE PATENTANMELDUNG

(11) **EP 2 492 738 A1**
(43) Veröffentlichungstag der Anmeldung: **29.08.2012**
(21) Anmeldenummer: 12152391.4
(22) Anmeldetag: 25.01.2012
(51) Int. Cl.: G02B 26/10, G02B 3/00, G01S 7/481, G01S 17/02, G01V 8/26

(54) **Optoelektronischer Sensor und Verfahren zur Erfassung von Objekten**

(30) Priorität: 22.02.2011 DE 102011000863
(71) Anmelder: Sick AG, 79183 Waldkirch (DE)
(72) Erfinder: Hammes, Markus, 79104 Freiburg (DE)
(74) Vertreter: Hehl, Ulrich

(57) **Zusammenfassung**

Es wird ein optoelektronischer Sensor (10) angegeben, insbesondere ein Laserscanner, der einen Lichtsender (12) zum Aussenden eines Lichtstrahls (16) mit einem in einer Linienrichtung langgestreckten Strahlprofil (28) in eine Überwachungsebene (26), einen Lichtempfänger (34) zum Erzeugen eines Empfangssignals aus dem von Objekten in der Überwachungsebene (26) remittierten Lichtstrahl (30), eine beweglichen Ablenkeinheit (24) zur periodischen Ablenkung des Lichtstrahls (16, 30), um im Verlauf der Bewegung die Überwachungsebene (26) abzutasten, und eine Auswertungseinheit (42) zur Erfassung der Objekte anhand des Empfangssignals aufweist. Der Laserscanner weist ein dem Lichtsender (12) nachgeordnetes optisches Strahlverdrehelement (20) auf, welches die Linienrichtung eines hindurchtretenden Lichtstrahls (16) verkippen kann.

## Beschreibung

Die Erfindung betrifft einen optoelektronischen Sensor, insbesondere Laserscanner, und ein Verfahren zur Erfassung von Objekten in einer Überwachungsebene nach dem Oberbegriff von Anspruch 1 beziehungsweise 15.

Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird. Mit den Winkel- und Entfernungsangaben ist der Ort eines Objektes in dem Überwachungsbereich in zweidimensionalen Polarkoordinaten erfasst.

Laserscanner werden in der Sicherheitstechnik zur Überwachung einer Gefahrenquelle eingesetzt, wie beispielsweise im industriellen Umfeld eine gefährliche Maschine oder ein fahrerloses Transportsystem. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Je nach Art des Gefährdungsbereichs und Anwendung der Maschine liegen die Abmessungen des zu überwachenden Bereichs zwischen wenigen Zentimetern und mehreren Metern. Jenseits der Reichweite eines Laserscanners, beispielsweise in Abständen größer 7 Metern, kann keine sicherheitstechnische Überwachung stattfinden. Die laterale Auflösung von Scandaten ist durch die Ausdehnung des tastenden Lichtflecks begrenzt. Bei verbesserter Auflösung ließen sich neben der Sicherheitsfunktion auch Zusatzfunktionen umsetzen, etwa Navigation, Automatisierungsfunktionen oder Registrierung.

Die Reichweite von Sicherheitslaserscannern wird neben energetischen Randbedingungen auch maßgeblich durch geometrische Einflüsse bestimmt. Der Lichtfleck, den ein Laserscanner in den Außenraum abbildet, wird bei gegebener Brennweite des Sendekollimators und gegebener Laserquelle aufgrund der optischen Abbildungsgesetze mit wachsendem Abstand vom Sensor größer. Da meistens direkt die Emissionsfläche der Laserdiode abgebildet wird, entspricht die beleuchtete Fläche in dem Überwachungsraum bei aberrationsfreier Abbildung einer Linie, deren Länge ein Vielfaches größer ist als ihre Breite. Die Orientierung des Lichtflecks beziehungsweise der Linie spielt sowohl für die Winkelauflösung als auch für die energetische Reichweite eine wichtige Rolle:
Zwei benachbarte Objekte innerhalb der Scanebene können nur dann als lateral getrennt erkannt werden, wenn keine Überlappung benachbarter, also aufeinanderfolgender Abtaststrahlen stattfindet. Demnach erreicht man eine optimale Winkelauflösung, wenn der langgestreckte Lichtfleck senkrecht zur Scanebene steht. Wenn umgekehrt der Lichtfleck parallel zu der Scanebene ausgerichtet ist, überlappen sich benachbarte Abtaststrahlen bereits bei geringeren Objektabständen mit der Folge optischen Übersprechens in benachbarten Scanwinkeln. In diesem Fall wird also die Winkelauflösung des Laserscanners nicht mehr durch den Winkelabstand benachbarter Abtaststrahlen, sondern durch die Abmessungen des Lichtflecks begrenzt.

Bei herkömmlichen Laserscannern ist es aber unmöglich, diese Erkenntnis auszunutzen und den Lichtfleck senkrecht zur Überwachungsebene zu orientieren. Der kollimierte Sendestrahl fällt in einem Laserscanner auf einen rotierenden Spiegel und wird in die verschiedenen Scanrichtungen umgelenkt. Dabei ändert sich zwangsläufig die Orientierung des Lichtflecks mit dem Scanwinkel . Ein bei einem Scanwinkel von 0° senkrecht zu der Überwachungsebene orientierter Lichtfleck fällt bei einem Scanwinkel von 90° quer auf den Drehspiegel und bildet somit in der Überwachungsebene eine horizontale Linie.

Dieser Effekt eines sich mit der Scanbewegung drehenden Lichtflecks ist an sich bekannt. In der EP 1 300 715 B1 wird der Lichtfleck zusätzlich gestreckt, um eine Linie zu bilden. Der Sensor wird dann so an einem Fahrzeug montiert, dass Bereiche seitlich des Fahrzeugs mit einem liegenden und die Bereiche in Fahrtrichtung mit einem stehenden Lichtstrich erfasst werden. Damit kann seitlich die Scanfrequenz reduziert und nach vorne zusätzliche Höheninformation gewonnen werden. Ein Übersprechen benachbarter Abtaststrahlen wird dabei nicht diskutiert, und die über die Scanbewegung unterschiedliche Orientierung des Lichtflecks wird hier nicht als unerwünscht angesehen, sondern ist im Gegenteil Grundlage der in EP 1 300 715 B1 beschriebenen Weiterentwicklung.

Aufgrund der stetig wachsenden Lichtleistungen verfügbarer Laserlichtquellen könnten Laserscanner energetisch prinzipiell höhere Reichweiten erreichen, als dies bisher möglich ist. Dieses erhöhte Reichweitenpotential kann aber wegen der geometrisch bedingten Rotation des Lichtflecks und dem daraus resultierenden Übersprechen benachbarter Abtaststrahlen sowie Überstrahlungsverlusten in bestimmten festen Scanrichtungen nicht genutzt werden.

Das Problem einer ungünstigen Orientierung tritt natürlich nicht auf, wenn der Lichtfleck rotationssymmetrisch ist, ihm also keine Linienrichtung zugewiesen werden kann. Wenn die Sendeoptik aber die Emitterfläche einer üblichen Laserdiode abbildet, so führt dies zu einem langgestreckten Lichtfleck. Sendeoptiken, welche den Sendestrahl symmetrisieren, sind aufwändig, benötigen viel Bauraum und sind nicht in der Lage, einen Lichtfleck derselben geringen Auflösung zu erzeugen wie die Querausdehnung der Emitterfläche.

Aus der EP 0 961 152 B2 ist ein Verfahren und eine Vorrichtung zur Formung eines kollimierten Lichtstrahls aus den Emissionen mehrerer Lichtquellen bekannt. Darin werden optische Elemente verwendet, welche die nebeneinander liegenden Lichtflecken eines Laserbarrens zur Fasereinkopplung bündeln. Ein Zusammenhang mit Laserscannern wird nicht hergestellt und es gibt auch keine bewegliche Ablenkeinheit

Es ist daher Aufgabe der Erfindung, die Auflösung beziehungsweise Reichweite eines gattungsgemäßen Sensors zu erhöhen.

Diese Aufgabe wird durch einen optoelektronischen Sensor und ein Verfahren zur Erfassung von Objekten in einer Überwachungsebene nach Anspruch 1 beziehungsweise 15 gelöst. Dabei geht die Erfindung von dem Grundgedanken aus, die meist lichtquellenbedingte Asymmetrie des Strahlprofils und damit des Lichtflecks des Sendestrahls hinzunehmen. Es wird also nicht versucht, den beispielsweise elliptischen oder linienförmigen Lichtfleck zu einem kreis- oder punktförmigen Lichtfleck zu kollimieren. Stattdessen wird die durch die bewegliche Ablenkeinheit bedingte Veränderung der Orientierung des Lichtflecks im Überwachungsbereich kompensiert. Dazu wird in den Sendelichtstrahl ein optisches Strahlverdrehelement als Zwischenelement eingefügt, welches in der Lage ist, den Lichtfleck zu verkippen. Das Strahlverdrehelement ist insbesondere dafür ausgebildet, einen mit beliebiger Orientierung der Längserstreckung beziehungsweise Linienrichtung einfallenden Sendelichtstrahl so zu verdrehen, dass der Sendelichtstrahl stets mit ein und derselben einheitlichen Orientierung der Linienrichtung hinaustritt.

Die Erfindung hat den Vorteil, dass das Problem der scanrichtungsabhängigen Lichtfleckrotation beseitigt wird. Damit erlaubt die Erfindung eine Vergrößerung der Scanreichweite sowie eine Verbesserung der geometrischen Auflösung. Optische Bauteile, die sich als Strahlverdrehelement eignen, haben nur eine moderate Komplexität und sind sehr kostengünstig herstellbar. Wegen deren ursprünglichen Verwendungsfeldern, nämlich der Faserkopplung von Laserbarren im Gehäuse, sind sehr kleine Strahlverdrehelemente verfügbar. Der erforderliche Bauraum und die mechanische Anfälligkeit ist daher gering.

Das Strahlverdrehelement ist bevorzugt derart ausgebildet, dass der ausgesandte Lichtstrahl mit seiner Linienrichtung in der Überwachungsebene unabhängig von der Position der beweglichen Ablenkeinheit senkrecht zu der Überwachungsebene orientiert ist. Das hierzu verwendete Strahlverdrehelement hat die oben genannte besondere Eigenschaft, die Orientierung des austretenden Sendelichtstrahls unabhängig von der Orientierung des eintretenden Sendelichtstrahls konstant zu halten. Damit liegt stets die quer zur Linienrichtung stehende schmale Ausdehnung des Sendelichtflecks in der Überwachungsebene. Ein solcher vertikal ausgerichteter Sendelichtfleck ist energetisch besonders vorteilhaft, denn nach den eingangs genannten Sicherheitsnormen werden zylindrische Prüfkörper senkrecht zur Überwachungsebene ausgerichtet. Diese Prüfkörper, die beispielsweise den Beinen einer stehenden Person entsprechen, werden von dem derart orientierten Lichtfleck optimal überdeckt, so das sich Lichtverluste durch Überstrahlen des Objekts stark reduzieren lassen. Zugleich wird in Winkelrichtung die bestmögliche Auflösung ohne Übersprechen zwischen benachbarten Strahlen erzielt.

Die bewegliche Ablenkeinheit ist bevorzugt ein rotierender Drehspiegel. Damit können große Winkelbereiche mit hoher Wiederholfrequenz überwacht werden. Prinzipiell sind auch andere Bewegungen der Ablenkeinheit denkbar, etwa Polygonspiegelräder beziehungsweise schwingende oder anders verschwenkbare Spiegel.

Das Strahlverdrehelement ist bevorzugt mit der Ablenkeinheit mitbewegt montiert. Es rotiert demnach mit, wenn die Ablenkeinheit ein Drehspiegel ist. Dadurch verändert sich die Orientierung der Linienrichtung des in das Strahlverdrehelement einfallenden Sendelichtstrahls, denn der Lichtsender wird üblicherweise ortsfest im Gehäuse angeordnet. Die Mitbewegung kann durch eine starre Verbindung zwischen Strahlverdrehelement und Ablenkeinheit realisiert sein. Das ist eine einfache konstruktive Lösung, die Justageaufwand und mechanische Anfälligkeit besonders gering hält. Alternativ kann auch ein Getriebeelement vorgesehen sein, wobei der Begriff an dieser Stelle sehr weit gefasst sein soll und bedeutet, dass das Strahlverdrehelement zwar die Bewegung mitvollzieht, aber in einer anderen Geschwindigkeit. Damit kann beispielsweise erreicht werden, dass das Strahlverdrehelement halb so schnell rotiert wie die Ablenkeinheit.

Das Strahlverdrehelement ist bevorzugt im Strahlengang des ausgesandten Lichtstrahls zwischen Lichtsender und Ablenkeinheit angeordnet. Das Rotieren der Linienrichtung wird damit schon früh im Strahlengang unterbunden. Das Strahlverdrehelement kann an dieser Stelle besonders leicht untergebracht werden. Prinzipiell wäre auch denkbar, das Strahlverdrehelement hinter der Ablenkeinheit anzuordnen. Dazu müsste es aber viel größere Bewegungen vollziehen, um den Sendestrahl bei allen Stellungen der Ablenkeinheit aufzufangen. Beispielsweise müsste es exzentrisch auf dem Außenumfang eines Drehspiegels mitbewegt werden, was wesentlich aufwändiger ist, als es vor dem Drehspiegel lediglich um die eigene Achse zu rotieren.

Der Lichtsender ist bevorzugt eine Laserlichtquelle und weist eine Kollimatorlinse auf. In einem Laserscanner wird meist ein Einzelemitter verwendet, dessen langgestreckte Emitterfläche zu der Längserstreckung des Lichtflecks in Linienrichtung führt. Kollimiertes Licht ist erforderlich, um die Eigenschaften des Strahlverdrehelements zu nutzen. Allerdings muss die Kollimierung nicht unbedingt selbst die Anforderungen an den ausgesandten Lichtstrahl erfüllen. Es genügt eine Brennweite der Kollimatorlinse, die zu einem Strahlprofil innerhalb des Akzeptanzwinkels des Strahlverdrehelements führt.

Das Strahlverdrehelement weist bevorzugt eine Tandemzylinderlinsenanordnung auf, die ein Substrat mit jeweils mindestens einer Zylinderlinse auf der Vorderseite und mindestens einer Zylinderlinse auf der Rückseite des Substrats umfasst. Das Substrat ist ein transparenter Quader beispielsweise aus demselben Material wie die Zylinderlinsen. Die Zylinderlinsen und das Substrat müssen dabei keine zunächst separaten und dann miteinander verbundenen Körper sein. Vorteilhafterweise entstammt das gesamte Strahlverdrehelement einstückig und ohne Übergänge zwischen Substrat und Zylinderlinse demselben einheitlichen Herstellungsprozess. Eine derartige Tandemzylinderlinsenanordnung hat die gewünschte Eigenschaft der Strahlverdrehung, also der Verkippung des Strahlprofils, so dass die Linienrichtung eines austretenden Lichtstrahls unabhängig von der Linienrichtung des eintretenden Lichtstrahls konstant bleibt. Dabei genügt als Minimalkonfiguration, wenn auf der Vorderseite und der Rückseite nur jeweils eine Zylinderlinse vorgesehen ist, besonders wenn die Lichtquelle des Lichtsenders nur ein Einzelemitter ist. Alternativ sind jeweils eine gleiche Vielzahl mehrerer, untereinander gleichartiger Zylinderlinsen auf der Vorderseite und der Rückseite vorgesehen, beispielsweise je ein Zylinderlinsenpaar je Emitter.

Die Zylinderlinsen auf der Vorderseite weisen bevorzugt eine Brennweite auf, bei welcher der Brennpunkt in der Ebene der Zylinderlinsen auf der Rückseite liegt. Der Fokus liegt dabei insbesondere mittig in der Ebene der Zylinderlinsen auf der Rückseite und in der Mitte der jeweils zugehörigen Zylinderlinse auf der Rückseite. Zudem sind die Zylinderlinsen zueinander bevorzugt parallel ausgerichtet. Diese Eigenschaften dienen dazu, eine möglichst störungsfreie Umverteilung auf einen Lichtfleck mit der gewünschten Linienrichtung zu erreichen.

Die Tandemzylinderlinsenanordnung ist bevorzugt so orientiert, dass der austretende Lichtstrahl mit seiner Linienrichtung in der Überwachungsebene senkrecht zu der Überwachungsebene steht. Der Sendelichtstrahl des gegenüber der Ablenkeinheit ruhenden Lichtsenders fällt mit in Abhängigkeit von der Stellung der Ablenkeinheit unterschiedlicher relativer Orientierung auf das mitbewegte Tandemzylinderlinsenarray. Der aus dem Tandemzylinderlinsenarray austretende Sendelichtstrahl hat dann eine einheitliche Linienrichtung. Diese kann so gewählt werden, dass der Lichtspot in der Überwachungsebene vertikal orientiert ist, um Übersprechen zwischen benachbarten Abtaststrahlen zu verhindern und vertikale Objekte mit besonders viel Energie abzutasten.

Das Strahlverdrehelement weist bevorzugt ein Prisma auf, insbesondere ein Doveprisma. Dies ist in erster Linie eine alternative Ausgestaltung zu einem Tandemzylinderlinsenarray, ohne damit die kombinierte Verwendung dieser Elemente auszuschließen. Ein Doveprisma ist der Stumpf eines 90°-Prismas. Wenn es rotiert, so rotiert das transmittierte Bild mit der doppelten Geschwindigkeit. Somit bringt das Doveprisma die gewünschten Eigenschaften eines Strahlverdrehelements mit, sofern dafür gesorgt wird, dass zwischen der Bewegungsgeschwindigkeit der Ablenkeinheit und des Doveprismas ein Faktor zwei liegt.

Nochmals alternativ oder kumulativ weist das Strahlverdrehelement bevorzugt ein diffraktives optisches Element auf. Einem diffraktiven optischen Element kann das transmittierte Bild beliebig vorgegeben werden, demnach auch so, dass es die Rotation kompensiert. Allerdings kann dabei Streulicht entstehen. Eine Fresnellinse ist eine weitere mögliche Alternative.

Dem Strahlverdrehelement ist bevorzugt mindestens eine Linse nachgeordnet. Diese Sammellinse dient hier als Fourierlinse und ist bevorzugt zwischen Strahlverdrehelement und Ablenkeinheit angeordnet. Im Falle eines Drehspiegels als Ablenkeinheit befindet sich die Linse bevorzugt auf dessen Drehachse, wenn diese mit der optischen Achse des Lichtsenders zusammenfällt. Aus mechanischen Gründen kann es dann sinnvoll sein, die Linse mitzubewegen und in gleicher Weise zu montieren wie das über dieselbe Achse mitrotierende Strahlverdrehelement. Notwendig ist diese Mitbewegung nicht, weil die Linse in der Bewegungsrichtung der Ablenkeinheit symmetrisch ausgebildet werden kann. Die Linse sorgt dafür, dass der Sendelichtstrahl, der bei Austritt aus dem Strahlverdrehelement in der Regel zumindest noch leicht divergiert, in der gewünschten Weise in der Überwachungsebene gebündelt wird. Dazu kann eine einzelne Linse genügen, aber auch eine Kombination mehrerer Linsen erforderlich sein.

Der Sensor ist bevorzugt als Entfernungsmesser ausgebildet, indem in der Auswertungseinheit die Lichtlaufzeit zwischen Aussenden und Empfang des Lichtstrahls und daraus die Entfernung eines Objekts bestimmbar ist. Damit können wesentlich genauere Objektinformationen erfasst werden. Vorteilhafterweise ist eine Winkelmesseinheit vorgesehen, mittels derer die Winkelstellung der Ablenkeinheit erfassbar ist, so dass für erfasste Objekte in der Überwachungsebene zweidimensionale Positionskoordinaten zur Verfügung stehen. Damit wird eine vollständige Positionserfassung innerhalb der Überwachungsebene möglich. Zusätzlich können bei Bedarf auch Objektkonturen vermessen werden.

Der Sensor ist bevorzugt als Sicherheitsscanner mit einem Sicherheitsausgang ausgebildet, indem in der Auswertungseinheit bestimmbar ist, ob sich ein Objekt in einem Schutzfeld innerhalb der Überwachungsebene befindet und daraufhin ein sicherheitsgerichtetes Abschaltsignal über den Sicherheitsausgang ausgebbar ist. Die verbesserte Auflösung und Reichweite kommt hier einer verbesserten sicherheitstechnischen Anwendung zugute.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines erfindungsgemäßen Sensors;
- Fig. 2: eine vereinfachte Darstellung des Sendestrahlengangs des Sensors gemäß Figur 1;
- Fig. 3a-d: eine Darstellung der Auswirkung eines Strahlverdrehelements auf einfallende Lichtstrahlen mit einem in verschiedene Richtungen orientierten Strahlprofil;
- Fig. 4a: eine schematische Darstellung der Veränderung der Orientierung eines langgestreckten Lichtflecks des Sendelichtstrahls in der Überwachungsebene mit der Winkelstellung der Ablenkeinheit bei einem herkömmlichen Laserscanner;
- Fig. 4b: eine Darstellung analog Figur 4a für einen erfindungsgemäßen Sensor, bei dem ein langgestreckter Lichtfleck des Sendelichtstrahls unabhängig von der Winkelstellung der Ablenkeinheit in der Überwachungsebene überall vertikal orientiert ist;
- Fig. 5a: eine dreidimensionale Ansicht eines Strahlverdrehelements; und
- Fig. 5b: eine dreidimensionale Ansicht eines weiteren Strahlverdrehelements.

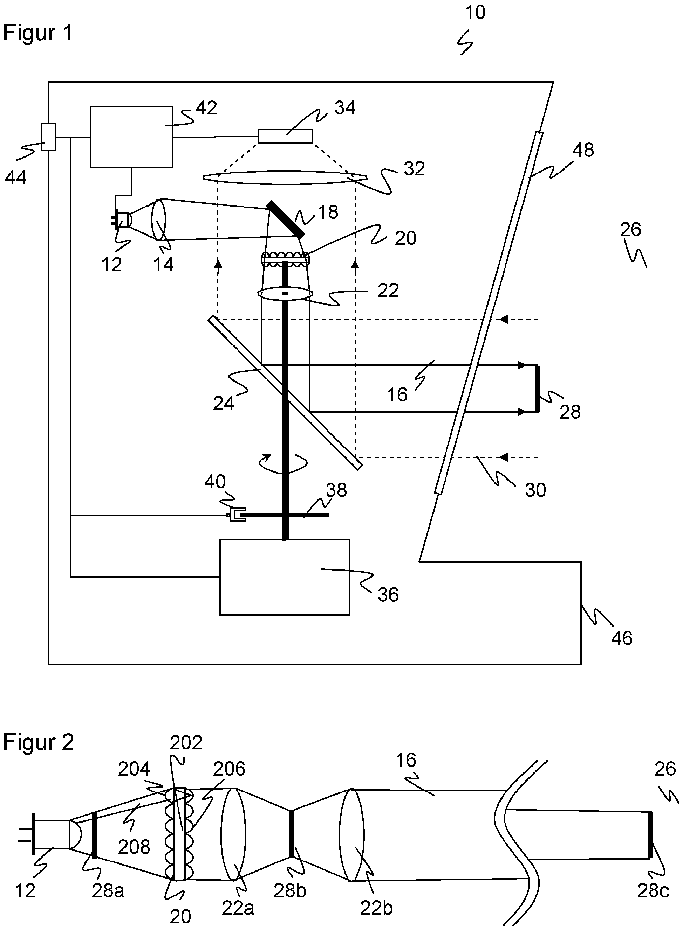

Fig. 1 zeigt eine schematische Schnittdarstellung durch einen als Laserscanner 10 ausgebildeten erfindungsgemäßen Sensor. Ein Lichtsender 12, beispielsweise mit einer Laserlichtquelle, erzeugt mit Hilfe einer Kollimationslinse 14 einen Sendelichtstrahl 16. Über eine erste Ablenkeinheit 18 wird der Sendelichtstrahl 16 durch ein Strahlverdrehelement 20 und eine Sendeoptik 22 und über eine zweite Ablenkeinheit 24 in einen Überwachungsbereich 26 umgelenkt. Mit Bezugszeichen 28 ist schematisch das Strahlprofil des Sendelichtstrahls 16 dargestellt. Das Strahlprofil 28 entspricht dem Lichtfleck, den der Sendelichtstrahl auf einem angetasteten Objekt mit einer senkrecht zum Sendelichtstrahl 16 stehenden Oberfläche erzeugt. Aufgrund der Geometrie der Emitterfläche der Laserlichtquelle des Lichtsenders 12 ist das Strahlprofil nicht rotationssymmetrisch, sondern langgestreckt, bildet somit eine Ellipse oder eine Linie mit einer Linienrichtung, in welcher der Lichtfleck eine größere Ausdehnung aufweist als quer zu der Linienrichtung. Die Wirkung des Strahlverdrehelements 20 auf die Orientierung der Linienrichtung des Lichtflecks wird weiter unten anhand der Figuren 2 bis 5 näher erläutert.

Fällt der Sendelichtstrahl 16 in dem Überwachungsbereich 26 auf ein Objekt, so gelangt remittiertes Licht 30 wieder zu dem Laserscanner 10 zurück und wird dort über die zweite Ablenkeinheit 24 und mittels einer Empfangsoptik 32 von einem Lichtempfänger 34 detektiert, beispielsweise einer Photodiode.

Die zweite Ablenkeinheit 24 ist in der Regel als Drehspiegel ausgestaltet, die durch Antrieb eines Motors 36 kontinuierlich rotiert. Die jeweilige Winkelstellung der Ablenkeinheit 24 wird über einen Encoder erkannt, der beispielsweise eine Codescheibe 38 und eine Gabellichtschranke 40 umfasst.

Das Strahlverdrehelement 20 dreht sich mit der zweiten Ablenkeinheit 24 um die optische Achse mit. Dazu werden Strahlverdrehelement 20 und zweite Ablenkeinheit 24 starr miteinander verbunden. Diese Verbindung kann abweichend von der Darstellung außerhalb des Strahlengangs erfolgen. Alternative Konstruktionen sind denkbar, um das Strahlverdrehelement 20 in eine synchrone Drehbewegung zu versetzen, etwa die Anbindung über ein Getriebeelement oder sogar ein eigener Antrieb. Dadurch besteht auch die Möglichkeit, dass sich das Strahlverdrehelement 20 mit einer anderen Drehgeschwindigkeit bewegt, beispielsweise mit halber oder doppelter Drehgeschwindigkeit. Die Empfangsoptik 22 kann die Drehbewegung mitvollziehen, muss dies aber wegen ihre Symmetrieeigenschaften nicht.

Der von dem Lichtsender 12 erzeugte Sendelichtstrahl 16 überstreicht somit den durch die Rotationsbewegung erzeugten Überwachungsbereich 26. Wird ein von dem Lichtempfänger 34 empfangenes remittiertes Lichtsignal 30 aus dem Überwachungsbereich 26 empfangen, so kann aus der Winkelstellung der Ablenkeinheit 24 mittels des Encoders 38, 40 auf die Winkellage des Objektes in dem Überwachungsbereich 26 geschlossen werden. Zusätzlich wird die Lichtlaufzeit von ihrem Aussenden bis zu dem Empfang nach Reflexion an dem Objekt in dem Überwachungsbereich 26 ermittelt. Dies erfolgt insbesondere anhand des eingangs beschriebenen Pulslaufzeitverfahrens. Aus der Lichtlaufzeit wird unter Verwendung der Lichtgeschwindigkeit auf die Entfernung des Objektes von dem Sicherheitslaserscanner 10 geschlossen.

Diese Auswertung erfolgt in einer Auswerteeinheit 42, die dafür mit dem Lichtsender 12, dem Lichtempfänger 34, dem Motor 36 und dem Encoder 40 verbunden ist. Somit stehen über den Winkel und die Entfernung zweidimensionale Polarkoordinaten aller Objekte in dem Überwachungsbereich 26 zur Verfügung. In sicherheitstechnischer Anwendung prüft die Auswertungseinheit 42, ob ein unzulässiges Objekt in einen innerhalb des Überwachungsbereichs 26 festgelegten Schutzbereich eingreift. Ist das der Fall, wird über einen Sicherheitsausgang 44 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. Alle genannten Funktionskomponenten sind in einem Gehäuse 46 angeordnet, das frontseitig, also im Bereich des Lichtaus- und Lichteintritts, eine Frontscheibe 48 aufweist.

Figur 2 zeigt den Strahlengang des Sendelichtstrahls 16 in einer vereinfachten Darstellung, bei der die Umlenkungen durch die Ablenkeinheiten 18, 24 unberücksichtigt bleiben. Das Strahlverdrehelement 20 ist ein Tandem-Zylinderlinsenarray, welches ein quaderförmiges Substrat 202 und je ein Feld von vorderen Zylinderlinsen 204 und hinteren Zylinderlinsen 206 aufweist. Wie durch einen beispielhaften Strahlausschnitt 208 gezeigt, liegen die Brennpunkte der vorderen Zylinderlinsen 204 in der Ebene der hinteren Zylinderlinsen 206.

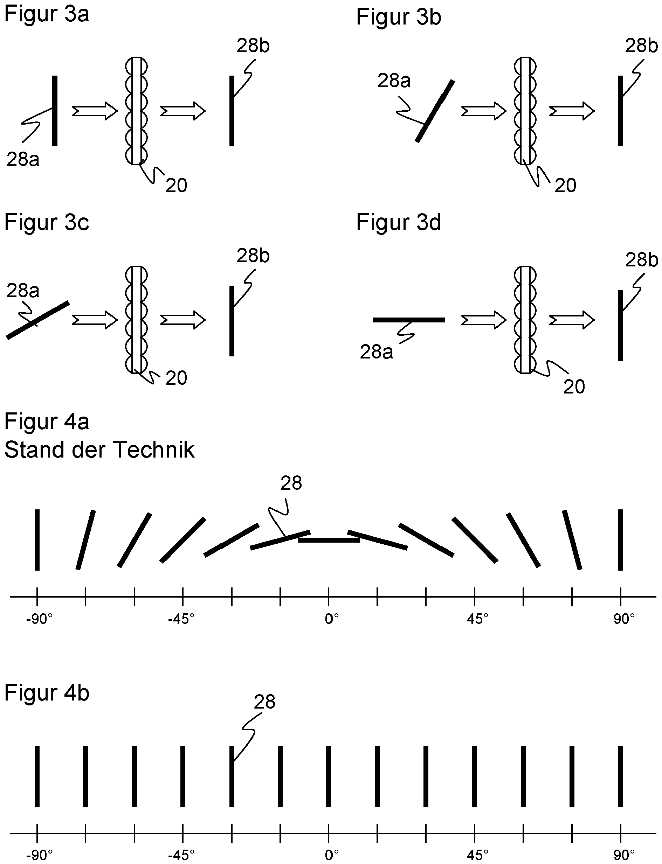

Das Strahlverdrehelement 20 hat die Eigenschaft, die Linienrichtung eines einfallenden Lichtflecks 28a gleichzurichten. Die Figuren 3a-d illustrieren diesen Effekt. Unabhängig davon, ob das Strahlprofil 28a des einfallenden Sendelichtstrahls 16 wie in Figur 3a vertikal, wie in den Figuren 3b und 3c mit unterschiedlicher Schräglage oder wie in Figur 3d horizontal orientiert ist, resultiert nach Durchtritt durch das Strahlverdrehelement 20 ein Sendelichtstrahl 16 mit vertikal orientiertem Strahlprofil 28a. Dabei wird der Effekt des Strahlverdrehelements 20 idealisiert dargestellt, tatsächlich sind kleinere Abweichungen und Verzerrungen möglich.

Wie in Figur 2 gezeigt, wird dem Strahlverdrehelement 20 eine Empfangsoptik 22a, 22b nachgeordnet, die beispielsweise eine oder mehrere Sammellinsen umfasst. Damit wird der von dem Strahlverdrehelement 20 erzeugte virtuelle Lichtfleck 28b in den Überwachungsbereich 26 abgebildet, so dass die Abtastung mit einem Tastfleck 28c auf Objekten im Überwachungsbereich erfolgen kann, welcher entsprechend der gewünschten Auflösung geometrisch begrenzt ist.

Das Strahlverdrehelement 20 dient dazu, die einleitend beschriebene Lichtfleckrotation um die optische Achse zu kompensieren, indem es eine gegenläufige Rotation des Lichtflecks 28 erzeugt. Die Lichtfleckrotation in einem herkömmlichen Laserscanner wird in Figur 4a illustriert. Abhängig vom Scanwinkel, also der Winkelstellung der zweiten Ablenkeinheit 24, dreht sich die Orientierung des Lichtflecks 28 in gleichem Maße. Das liegt daran, dass sich die zweite Ablenkeinheit unter der festgelegten Linienrichtung des innerhalb des Laserscanners 10 starren Lichtsenders 12 dreht. Deutlich erkennbar führt die Lichtfleckrotation in einigen Winkelbereichen, hier beispielhaft bei 0°, zu einer Überlagerung benachbarter Abtaststrahlen und deshalb zu einem unerwünschten Übersprechen, welches die Auflösung beeinträchtigt.

Figur 4b zeigt eine Figur 4a entsprechende Darstellung bei dem erfindungsgemäßen Laserscanner 10. Der Lichtfleck 28 ist unabhängig vom Scanwinkel vertikal orientiert. Die orientierungsunabhängige Brechkraft der Zylinderlinsen 204, 206 des Strahlverdrehelements 20 führt zu einer scanrichtungsabhängigen Rotation des Sendelichtstrahls 16 beziehungsweise des Lichtflecks 28, die zusammen mit der scanrichtungsabhängigen Rotation durch die zweite Ablenkeinheit 24 die Lichtfleckrotation in dem Überwachungsraum 26 ausschaltet. Die aufgrund der starren Verbindung zwischen Strahlverdrehelement 20 und zweiter Ablenkeinheit 24 feste Orientierung der Zylinderlinsen kann beliebig gewählt werden und damit insbesondere auch so, dass der Lichtfleck 28 im Überwachungsraum 26 stets senkrecht zur Überwachungsebene steht.

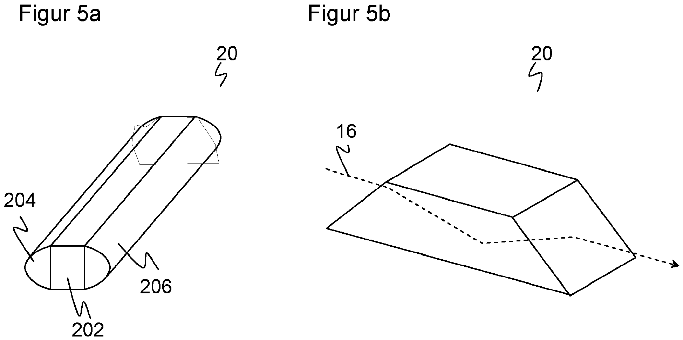

Figur 5a zeigt das Strahlverdrehelement 20 in einer dreidimensionalen Ansicht. Gerade für einen Einzelemitter als Lichtquelle in dem Lichtsender 12 kann bereits jeweils eine vordere Zylinderlinse 204 und hintere Zylinderlinse 206 genügen. Alternativ wird wie in den Figuren 1 bis 3 ein Tandemzylinderlinsenarray verwendet, welches einem parallelen Stapel des dargestellten Strahlverdrehelements 20 entspricht. Dabei dienen sämtliche inneren Trennlinien der Illustration. In der Praxis sucht man innere Grenzflächen zu vermeiden und bildet das Strahlverdrehelement 20 vorzugsweise als einstückigen Körper aus.

Figur 5b zeigt eine alternative Ausgestaltung des Strahlverdrehelements 20, bei dem anstelle eines Tandemzylinderlinsenarrays ein Doveprisma eingesetzt wird. Geometrisch ist ein Doveprisma der Stumpf eines 90°-Prismas, also eines Prismas mit einem gleichschenkligen, rechtwinkligen Dreieck als Grundfläche. Ein Doveprisma führt ebenfalls zu einer Rotation des transmittierten Bildes, wobei aber die Drehgeschwindigkeit gegenüber der Drehung des einfallenden Sendestrahls 16 verdoppelt ist. Deshalb muss konstruktiv dafür gesorgt werden, beispielsweise mit einem Getriebeelement, dass sich das Doveprisma mit einer Geschwindigkeit dreht, die sich um einen Faktor zwei von der Drehgeschwindigkeit der zweiten Ablenkeinheit 24 unterscheidet. Unter diesen Bedingungen kann die Lichtfleckrotation herkömmlicher Laserscanner auch mit Hilfe eines Doveprismas durch eine gegenläufige Strahlverdrehung kompensiert werden.

Weitere nicht dargestellte Alternativen für das Strahlverdrehelement 20 sind ein diffraktives optisches Element oder eine Fresnellinse. Bei einem Tandemzylinderlinsenarray oder einem Doveprisma sind aber geringere Streulichteffekte zu erwarten.

## Patentansprüche

1. Optoelektronischer Sensor (10), insbesondere Laserscanner, der einen Lichtsender (12) zum Aussenden eines Lichtstrahls (16) mit einem in einer Linienrichtung langgestreckten Strahlprofil (28) in eine Überwachungsebene (26), einen Lichtempfänger (34) zum Erzeugen eines Empfangssignals aus dem von Objekten in der Überwachungsebene (26) remittierten Lichtstrahl (30), eine bewegliche Ablenkeinheit (24) zur periodischen Ablenkung des Lichtstrahls (16, 30), um im Verlauf der Bewegung die Überwachungsebene (26) abzutasten, und eine Auswertungseinheit (42) zur Erfassung der Objekte anhand des Empfangssignals aufweist,
**gekennzeichnet durch**
ein dem Lichtsender (12) nachgeordnetes optisches Strahlverdrehelement (20), welches die Linienrichtung eines hindurchtretenden Lichtstrahls (16) verkippen kann.

2. Sensor (10) nach Anspruch 1,
wobei das Strahlverdrehelement (20) derart ausgebildet ist, dass der ausgesandte Lichtstrahl (16) mit seiner Linienrichtung in der Überwachungsebene (26) unabhängig von der Position der beweglichen Ablenkeinheit (24) senkrecht zu der Überwachungsebene (26) orientiert ist.

3. Sensor (10) nach Anspruch 1 oder 2,
wobei die bewegliche Ablenkeinheit (24) ein rotierender Drehspiegel ist.

4. Sensor (10) nach einem der vorhergehenden Ansprüche,
wobei das Strahlverdrehelement (20) mit der Ablenkeinheit (24) mitbewegt montiert ist, insbesondere starr oder über ein Getriebeelement mit der Ablenkeinheit (24) verbunden ist.

5. Sensor (10) nach einem der vorhergehenden Ansprüche,
wobei das Strahlverdrehelement (20) im Strahlengang des ausgesandten Lichtstrahls (16) zwischen Lichtsender (12) und Ablenkeinheit (24) angeordnet ist.

6. Sensor (10) nach einem der vorhergehenden Ansprüche,
wobei der Lichtsender (12) eine Laserlichtquelle und eine Kollimatorlinse (14) aufweist.

7. Sensor (10) nach einem der vorhergehenden Ansprüche,
wobei das Strahlverdrehelement (20) eine Tandemzylinderlinsenanordnung (202, 204, 206) aufweist, die ein Substrat (202) mit jeweils mindestens einer Zylinderlinse (202) auf der Vorderseite und mindestens einer Zylinderlinse (204) auf der Rückseite des Substrats (202) umfasst.

8. Sensor (10) nach Anspruch 7,
wobei die Zylinderlinsen (204) auf der Vorderseite eine Brennweite aufweisen, bei welcher der Brennpunkt in der Ebene der Zylinderlinsen (206) auf der Rückseite liegt und/oder wobei die Zylinderlinsen (204, 206) zueinander parallel ausgerichtet sind.

9. Sensor (10) nach Anspruch 7 oder 8,
wobei die Tandemzylinderlinsenanordnung (202, 204, 206) so orientiert ist, dass der austretende Lichtstrahl (16) mit seiner Linienrichtung in der Überwachungsebene (26) senkrecht zu der Überwachungsebene (26) steht.

10. Sensor (10) nach einem der vorhergehenden Ansprüche,
wobei das Strahlverdrehelement (20) ein Prisma aufweist, insbesondere ein Doveprisma.

11. Sensor (10) nach einem der vorhergehenden Ansprüche,
wobei das Strahlverdrehelement (20) ein diffraktives optisches Element oder eine Fresnellinse aufweist.

12. Sensor (10) nach einem der vorhergehenden Ansprüche,
wobei dem Strahlverdrehelement (20) mindestens eine Linse (22) nachgeordnet ist.

13. Sensor (10) nach einem der vorhergehenden Ansprüche,
der als Entfernungsmesser ausgebildet ist, indem in der Auswertungseinheit (42) die Lichtlaufzeit zwischen Aussenden und Empfang des Lichtstrahls (16, 30) und daraus die Entfernung eines Objekts bestimmbar ist und/oder wobei eine Winkelmesseinheit (38, 40) vorgesehen ist, mittels derer die Winkelstellung der Ablenkeinheit (24) erfassbar ist, so dass für erfasste Objekte in der Überwachungsebene (26) zweidimensionale Positionskoordinaten zur Verfügung stehen.

14. Sensor (10) nach einem der vorhergehenden Ansprüche,
der als Sicherheitsscanner mit einem Sicherheitsausgang (44) ausgebildet ist, indem in der Auswertungseinheit (42) bestimmbar ist, ob sich ein Objekt in einem Schutzfeld innerhalb der Überwachungsebene (26) befindet, und daraufhin ein sicherheitsgerichtetes Abschaltsignal über den Sicherheitsausgang (44) ausgebbar ist.

15. Verfahren zur Erfassung von Objekten in einer Überwachungsebene (26), bei dem von einem Lichtsender (12) ein Lichtstrahl (16) mit einem in einer Linienrichtung langgestreckten Strahlprofil (28) in die Überwachungsebene (26) ausgesandt und in einem Lichtempfänger (34) ein Empfangssignal aus dem von Objekten in der Überwachungsebene (26) remittierten Lichtstrahl (30) gebildet wird, wobei die Überwachungsebene (26) durch periodische Ablenkung des Lichtstrahls (16, 30) an einer beweglichen Ablenkeinheit (24) abgetastet wird und die Objekte anhand des Empfangssignals erfasst werden,
**dadurch gekennzeichnet,**
**dass** die Linienrichtung des ausgesandten Lichtstrahls (16) in einem dem Lichtsender (12) nachgeordneten optischen Strahlverdrehelement (20) verkippt werden kann.
